# EUROPEAN PATENT APPLICATION

(11) **EP 4 760 434 A2**
(43) Date of publication of application: **17.06.2026**
(21) Application number: 25222462.1
(22) Date of filing: 11.12.2025
(51) Int. Cl.: G05B 23/02, B64F 5/40, B64F 5/60

(54) **AIRCRAFT MAINTENANCE SYSTEM**

(30) Priority: 13.12.2024 GB 202418362
(71) Applicant: Airbus Operations Limited, Bristol BS34 7PA (GB)
(72) Inventor: BILL, Andrew, Bristol, BS34 7PA (GB)
(74) Representative: EIP

(57) **Abstract**

An aircraft maintenance system, method, and computer-readable storage medium are provided. The aircraft maintenance system comprises a processor and storage comprising a digital twin of at least part of an aircraft and a machine learning classifier. The aircraft maintenance system is configured to obtain aircraft operational data, update the digital twin based on the aircraft operational data, identify an altered operation of the aircraft based on the aircraft operational data, and determine a set of conditions responsible for the altered operation using the machine learning classifier to evaluate the digital twin. Output data indicative of the set of conditions responsible for the altered operation is generated.

## Description

### TECHNICAL FIELD

The present invention relates to aircraft maintenance systems.

### BACKGROUND

Aircraft typically comprise many sensors to monitor the state of associated aircraft components. Aircraft may be provided with built in test equipment (BITE) that is configured to monitor the states of associated aircraft components, detect altered operational states of components in the aircraft, and isolate the causes of the altered operational states of components in the aircraft.

### SUMMARY

According to a first aspect of the present invention, there is provided an aircraft maintenance system comprising: a processor; and storage comprising: a digital twin representing at least part of an aircraft, the digital twin including a model and prior aircraft operational data associated with the aircraft; a machine learning classifier that is configured to evaluate the digital twin; and computer-executable instructions which, when executed by the processor, cause the aircraft maintenance system to: obtain aircraft operational data corresponding to a period of operation of the aircraft; update the digital twin using the aircraft operational data; identify an altered operation of the aircraft during the period based on the aircraft operational data; determine a set of conditions responsible for the altered operation by using the machine learning classifier to evaluate the digital twin; and generate output data indicative of the set of conditions responsible for the altered operation.

By maintaining a digital twin of an aircraft using data collected by the aircraft during operation, and evaluating the digital twin using a machine learning classifier, it becomes possible to identify long term and/or intermittent factors responsible for putting the aircraft in altered operational states. For example, long term operational or environmental factors that degrade components or cause them to operate outside of design specifications may be identified by evaluating dependencies and correlations between components and operating conditions that would otherwise not be possible. This enables preventative maintenance and modification of operating conditions to mitigate the causes of altered operation or component degradation in aircraft.

Optionally the output data comprises control outputs configured to modify the operation of the aircraft based on the set of conditions responsible for the altered operation.

Optionally, the control outputs are configured to mitigate the occurrence of the set of conditions responsible for the altered operation.

Optionally, the aircraft operational data comprises: environmental data representing environmental conditions during the period of operation; flight data representing operating conditions of the aircraft during the period of operation; and component condition data representing states of one or more components in the aircraft during the period of operation.

Optionally, the environmental conditions are derived from one or more sensors on the aircraft and include any one or more of: temperature; humidity; precipitation; wind speed; turbulence; altitude; date; time; location; and atmospheric pressure.

Optionally, the operating conditions represented by the flight data include any one or more of: altitude; airspeed; component temperature; engine thrust; fuel consumption; control inputs; acceleration; braking force; and operational events.

Optionally, the set of conditions responsible for the altered operation comprise one or more of the environmental conditions.

Optionally, the set of conditions responsible for the altered operation comprise one or more of the operating conditions.

Optionally, the set of conditions responsible for the altered operation comprise a combination of one or more of the environmental conditions and one or more of the operating conditions.

Optionally, the identified altered operation is transient.

Optionally, the instructions, when executed by the processor, cause the aircraft maintenance system to: validate the set of conditions indicated in the output data; update the digital twin based on the set of conditions responsible for the altered operation; obtain further aircraft operational data corresponding to one or more further periods of operation of the aircraft; update the digital twin based on the further aircraft operational data; and generate prediction data by processing the updated digital twin using the machine learning classifier.

Optionally, the prediction data comprises an indication of a further set of conditions expected to contribute to a future altered operation in the aircraft.

Optionally, the instructions, when executed by the processor, cause the aircraft maintenance system to schedule the at least part of the aircraft for operation in conditions that are different to the further set of conditions indicated in the prediction data.

Optionally, the digital twin is a first digital twin representing at least part of a first aircraft and the storage comprises: a second digital twin representing at least part of a second aircraft; and a third digital twin representing a category of aircraft corresponding to both the first aircraft and the second aircraft, and wherein the instructions, when executed by the processor, cause the aircraft maintenance system to: update the third digital twin based on the first digital twin and the second digital twin; evaluate the third digital twin using the machine learning classifier to determine a common set of conditions responsible for an altered operation having occurred in the first aircraft and the second aircraft; and generate a common output data indicative of the common set of conditions having occurred in the first aircraft and the second aircraft.

Optionally, the aircraft maintenance system comprises an interface for obtaining aircraft operational data from one or more aircraft.

Optionally, the instructions, when executed by the processor, cause the aircraft maintenance system to: obtain validation data representing an evaluation of the set of conditions responsible for the altered operation; and update the machine learning classifier based on the validation data.

According to a second aspect there is provided a method of performing maintenance on at least part of an aircraft using the aircraft maintenance system according to any preceding claim, the method comprising: obtaining aircraft operational data corresponding to a period of operation of the aircraft; updating a digital twin using the aircraft operational data, the digital twin representing at least part of an aircraft, the digital twin including a model and prior aircraft operational data associated with the aircraft; identifying an altered operation of the aircraft during the period based on the aircraft operational data; determining a set of conditions responsible for the altered operation by using a machine learning classifier to evaluate the digital twin; generating output data indicative of the set of conditions responsible for the altered operation; and performing a maintenance procedure corresponding to the set of conditions.

Optionally, the method comprises: generating control outputs configured to modify the operation of the aircraft based on the set of conditions responsible for the altered operation, wherein the control outputs are configured to mitigate the occurrence of the set of conditions; and controlling the aircraft according to the control outputs.

Optionally, the aircraft operational data comprises: environmental data representing environmental conditions during the period of operation; flight data representing operating conditions of the aircraft during the period of operation; and component condition data representing states of one or more components in the aircraft during the period of operation.

Optionally, the set of conditions responsible for the altered operation comprise one or more of the environmental conditions.

Optionally, the set of conditions responsible for the altered operation comprise one or more of the operating conditions.

Optionally, the set of conditions responsible for the altered operation comprise a combination of one or more of the environmental conditions and one or more of the operating conditions.

Optionally, the method comprises: generating validation data representing an evaluation of the set of conditions; and updating the digital twin based on the validation data.

According to a third aspect there is provided a non-transitory computer-readable storage medium, comprising: a digital twin representing at least part of an aircraft, the digital twin including a model and prior aircraft operational data associated with the aircraft; a machine learning classifier that is configured to evaluate the digital twin; and computer-executable instructions which, when executed by the processor, cause the aircraft maintenance system to: obtain aircraft operational data corresponding to a period of operation of the aircraft; update the digital twin using the aircraft operational data; identify an altered operation of the aircraft during the period based on the aircraft operational data; determine a set of conditions responsible for the altered operation by using the machine learning classifier to evaluate the digital twin; and generate output data indicative of the set of conditions responsible for the altered operation.

According to a fourth aspect there is provided a system comprising: an aircraft maintenance system according to the first aspect; and an aircraft comprising: one or more sensors for generating aircraft operational data; and a controller configured to transmit the aircraft operational data to the aircraft maintenance system.

Further features and advantages of the invention will become apparent from the following description of preferred embodiments of the invention, given by way of example only, which is made with reference to the accompanying drawings.

### BRIEF DESCRIPTION OF THE DRAWINGS

Embodiments of the invention will now be described, by way of example only, with reference to the accompanying drawings, in which:
Figure 1 shows a schematic diagram of an aircraft maintenance system according to examples.
Figure 2 shows a schematic diagram of a process implemented by the aircraft maintenance system according to examples.
Figure 3 shows a schematic diagram of a further process implemented by the aircraft maintenance system according to examples.
Figure 4 shows a schematic diagram of the aircraft maintenance system where it is configured to perform fleet level monitoring of aircraft.
Figure 5 shows a schematic diagram of a method according to examples.
Figure 6 shows a schematic diagram of a non-transitory computer-readable storage medium according to examples.
Figure 7 shows a schematic diagram of a system according to examples.

### DETAILED DESCRIPTION

Monitoring the health and performance of aircraft is typically performed through a combination of systems designed to detect, diagnose, and respond to altered operation of an aircraft in real time. These systems ensure the reliability of the aircraft by continuously monitoring various components and systems during operation.

Aircraft may include Built-In Test Equipment (BITE) systems that are embedded diagnostic tools designed to monitor, test, and ensure the functionality of various onboard systems and components. To provide a BITE system for a given aircraft system, detailed and specific knowledge of both internal, external, and interconnected systems is used. BITE systems typically include applications, or software, which are configured to process messages from various components and sensors to detect irregularities in the operation of the aircraft system and to diagnose the causes of these irregularities.

BITE systems are typically deterministic, or programmatic, systems. Designers assign fault codes to specific causes or faults in an aircraft system and configure the BITE system with rules to select specific fault codes in response to certain combinations of signals or messages received from components in the aircraft system. This relies on specific and detailed knowledge of the aircraft system. For example, a BITE system designer may have to define the combinations of messages or signals that are associated with each fault code manually and/or fault isolation procedures to be performed after detecting a given altered operation.

Aircraft monitoring systems may be implemented using a combination of onboard and ground-based systems for monitoring the condition of the aircraft, and identifying the cause of irregularities in the operation of the aircraft.

Monitoring the health and performance of aircraft in this way typically involves processing data representing the condition and/or operation of components in an aircraft system along with performance metrics such as engine data, flight dynamics, and electrical systems.

These systems and methods, while capable of determining system level causes of irregularities in aircraft operations, are ineffective for determining intermittent or long-term causes of irregularities in aircraft operation or the degradation of component function. Using deterministic systems to determine the cause of irregularities in an aircraft limits the ability of these systems to identify unforeseen or novel contributing factors.

Certain examples described herein, provide systems and methods that are capable of identifying conditions that contribute or cause altered operation of aircraft systems. A digital twin of an aircraft, representing the function and history of the aircraft, is used in combination with a machine learning classifier to monitor the condition of the aircraft and identify intermittent and/or long-term conditions that contribute to the degradation of aircraft components. In some examples, digital twins for a plurality of aircraft are combined to provide fleet level monitoring to identify rare and difficult to detect conditions that are responsible for altered operations in aircraft.

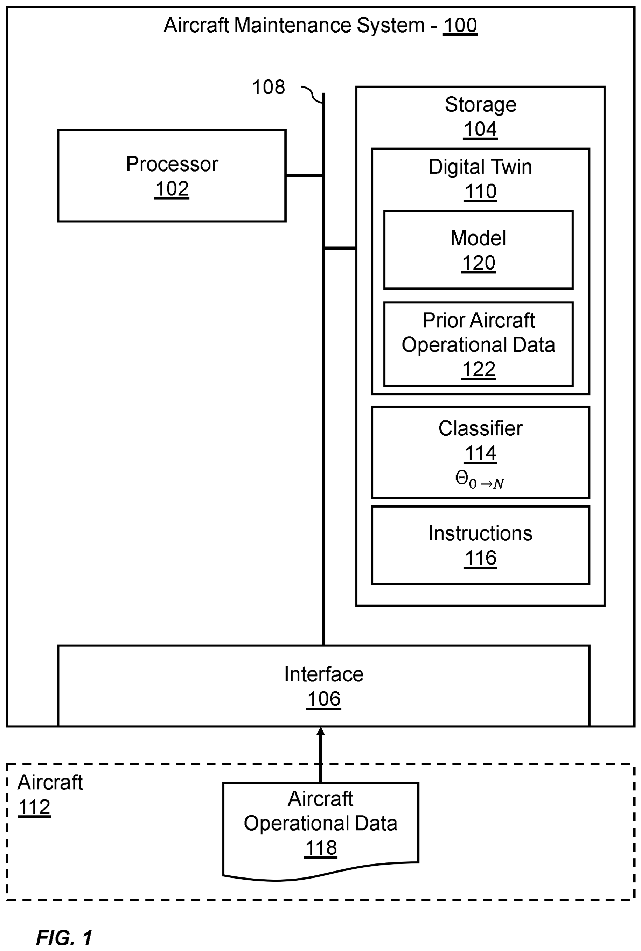

An aircraft maintenance system 100 in accordance with the present invention is illustrated schematically in Figure 1. The aircraft maintenance system comprises a processor 102, storage 104, and an interface 106. The processor 102, storage 104, and interface 106 are communicatively coupled over a bus 108.

The processor 102 includes a suitable combination of processing circuitry including any of: general purpose processing units (CPUs), graphics processing units (GPUs), application specific integrated circuit (ASICs), fixed programmable gate arrays (FGPAs) or any other suitable processing circuitry. In aircraft maintenance systems 100 a variety of processing circuitry types may be employed to support different functions. For example, where low-latency, and often lower-complexity, processing is required FPGAs or ASICs may be more suitable than for tasks requiring more complex processing, for which CPUs or GPUs may be more suitable.

The storage 104 includes a suitable combination of volatile and/or non-volatile storage. Volatile storage may be used to mount data that is to be readily accessed for performing one or more functions and non-volatile storage, such as Read-Only Memory (ROM), is used for longer term persistent storage of data. The storage 104 stores a digital twin 110 of at least part of an aircraft 112, a machine learning classifier 114, and computer-executable instructions 116 to be executed by the processor 102.

The interface 106 includes any suitable combination of hardware and software to enable the aircraft maintenance system 100 to obtain aircraft operational data 118 from an aircraft 112. In an example, the interface 106 comprises one or more wireless interfaces for obtaining aircraft operational data 118 from an aircraft 112 and/or from a remote computing device on which the aircraft operational data 118 is stored. The interface 106 may additionally, or alternatively, comprise one or more wired interfaces that are operable to obtain the aircraft operational data 118.

The digital twin 110 comprises a model 120 and prior aircraft operational data 122. The model 120 is a simplified representation of at least part of the aircraft 112, for example, including one or more aircraft systems or sub-systems that are included in the aircraft 112. The model 120 replicates the behavior and function of the modelled parts of the aircraft 112 under various conditions. For example, the model 120 may be configured to replicate the architecture, physical dynamics, and data flow within the modelled part of the aircraft 112. The complexity of the model 120 may depend on the specific purpose and system which is represented.

The prior aircraft operational data 122 is derived from historic operation of the aircraft 112. The aircraft maintenance system 100 may be configured to continuously, or periodically, obtain aircraft operational data from the aircraft 112. For example, the aircraft 112 may be configured to transmit performance metrics, flight data, and so forth to the aircraft maintenance system 100 during flight, after flight, or during a service procedure. The prior aircraft operational data 122 comprises past aircraft operational data that has been generated by and/or derived from the real aircraft 112.

The machine learning classifier 114 is configured to evaluate the digital twin 110. The machine learning classifier 114 may comprise a plurality of parameters *Θ*_{0 →*N*} which, in combination with other aspects of the machine learning classifier 114 such as the classifier architecture, define a learned policy for the classifier 114 when evaluating the digital twin 110. In an example, the machine learning classifier 114 comprises a neural network such as Recurrent Neural Network (RNN), a Transformer, a Graph Neural Network (GNN), Convolutional Neural Network (CNN), or any other suitable neural network architecture. It is to be appreciated that the machine learning classifier 110 may comprise other types of machine learning classifiers, such Bayesian Networks, Decision-Tree Based classifiers, Support Vector Machines (SVMs) or other suitable categories of machine learning classifier.

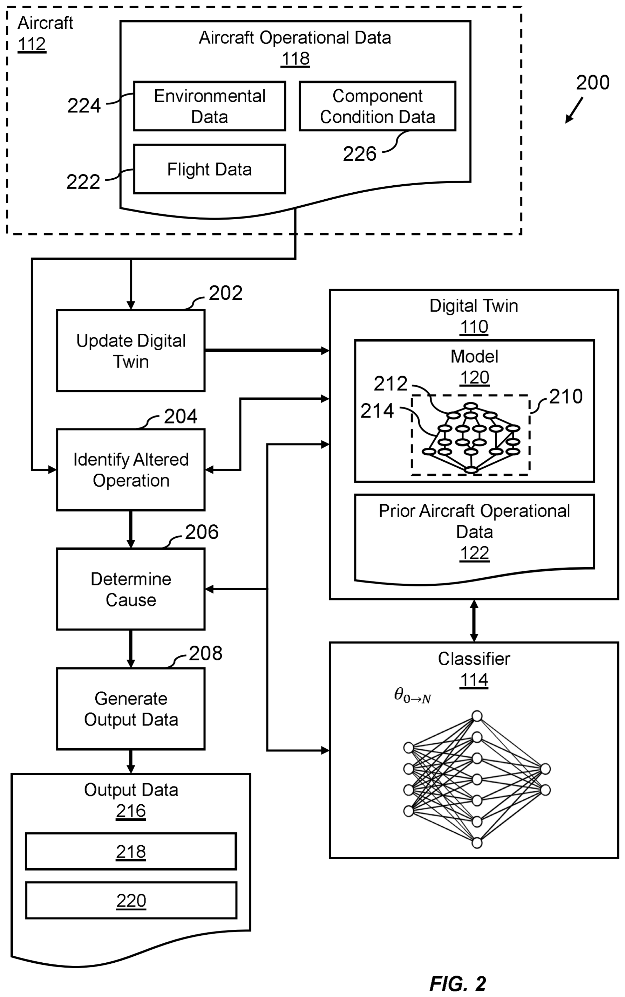

The aircraft maintenance system 100 implements a process 200, shown schematically in Figure 2, according to the instructions 116 when executed by the processor 102. The process 200 comprises obtaining aircraft operational data 118 corresponding to a period of operation of the aircraft 112. The period of operation of the aircraft 112 may include a period for which the aircraft 112 was in flight and/or while the aircraft was grounded. The aircraft operational data 118 may include data corresponding to a specific predefined period of time and/or a period of time since the prior aircraft operational data 122 was last updated.

The aircraft maintenance system 100 updates 202 the digital twin 110 of the at least part of the aircraft 112 using the aircraft operational data 118. In an example, updating the digital twin 110 comprises updating the prior aircraft operational data 122 to include the aircraft operational data 118. In this way, the prior aircraft operational data 122 is able to represent the recorded performance, usage, and behaviour of the aircraft 112 over time. As such, the prior aircraft operational data 122 is able to provide a detailed account of the past states, events, and interactions associated with the physical aircraft 112.

The aircraft maintenance system 100 identifies 204 an altered operation of the aircraft 112 during the period represented by the aircraft operational data 118. An altered operation of the aircraft 112 may include any of a number of unexpected behaviours in the aircraft.

An altered operation of the aircraft 112 may include the use of a redundant, or backup, system unexpectedly. In some cases, aircraft control systems may be configured to alternate between the use of main and backup systems in order to balance load or wear in aircraft components. Where the aircraft 112 operates a backup system outside of expected scenarios, this may be indicative of an irregularity or fault in components in a corresponding primary system in the aircraft 112.

An altered operation in the aircraft 112 may involve one or more components operating outside of predefined specifications. This may include a component operating outside of expected parameters, such as where a pressurized system is operating outside of an expected pressure range, or where an electrical component operates outside of an expected range of voltage, current, or frequency.

An altered operation of the aircraft 112 may relate to a status or condition of a given component. In BITE systems, components may be configured to monitor and report the condition of one or more aspects of the component to a centralized monitoring system. A component may, for instance, report the status of one or more of its electrical connections or one or more of its functions.

A given operational state for a component in the aircraft 112 may be indicative of an altered operation in some scenarios and a normal, or expected, operation in other scenarios. In such cases, the altered operation of the aircraft 112 may include specific combinations of operational states of a plurality of components in the aircraft 112. For example, where the combination of operational states of the plurality of components in the aircraft 112 are outside of design specifications for a given operating scenario.

In an example, identifying 204 the altered operation of the aircraft 112 may involve processing the aircraft operational data 118 using the digital twin 110. The aircraft operational data 118 may be compared to the prior aircraft operational data 112 to determine whether the aircraft operational data 118 includes one or more irregularities. In another example, the aircraft operational data 118 may be processed with the model 120 using the classifier 114 to determine whether the operation of the aircraft 112 during the period is incompatible with the function of the aircraft 112 represented by the model 120.

The aircraft maintenance system 100 determines 206 a set of conditions responsible for the altered operation by using the machine learning classifier 114 to evaluate the digital twin 110. The set of conditions responsible for the altered operation may also be referred to as contributing conditions. In an example, the model 120 comprises a graph model 210 of the at least part of the aircraft 112. The graph model 210 represents the function of one or more components in the at last part of the aircraft 112. For example, the graph model 210 may comprise a plurality of nodes 212 connected by a corresponding set of edges 214. Only one node 212 and one edge 214 are labelled in Figure 2 for clarity.

Each node 212 represents the function of a corresponding component in the aircraft 112. In an example, a node 212 corresponding to a valve in the aircraft 112 may be associated with a plurality of parameters corresponding to operational modes of the valve, the status of one or more circuits or motors in the valve, and metrics such as pressure of fluid through the valve.

The edges 214 represent the dependencies between different components and their functions. The machine learning classifier 114 is trained to evaluate the graph model 210 based on the parameters *Θ*_{0 →*N*} defining the policy of the machine learning classifier 114. The parameters *Θ*_{0 →*N*} may represent weights that are used to model the actual behaviour of the aircraft 112 according to the graph model 210. In this case, evaluating the digital twin 110 using the machine learning classifier 114 may involve applying aircraft operational data 118 to the nodes 212 in the graph model 210, and processing the graph model 210 with the classifier 114 to determine the set of conditions responsible for the identified altered operation.

In an example, the altered operation of the aircraft 112 may include a plurality of aircraft components operating outside of design specifications. The machine learning classifier 114 is trained to recognise and evaluate the dependencies between components in the aircraft 112. By evaluating the graph model 210 with the aircraft operational data 118 applied, the machine learning classifier 114 is able to isolate the set of conditions responsible for the altered operation, for example, by identifying a single component which is responsible for the plurality of aircraft components operating outside of design specifications.

The aircraft maintenance system 100 generates 208 output data 216 indicative of the determined set of conditions 218 responsible for the altered operation. The output data 216 may be used to mitigate or avoid the determined set of conditions 218 responsible for the altered operation during future operation of the aircraft 112.

In the example shown in Figure 2, the aircraft operational data 118 comprises flight data 222, environmental data 224, and component condition data 226. The component condition data 226 represents states of one or more components in the aircraft 112 during the period of operation. For example, the aircraft 112 may comprise a BITE system that is configured to identify and isolate component level causes of altered operation in the aircraft 112. The component condition data 226 may be used to identify the altered operation of the aircraft 112 and the contributing conditions 218, such as by isolating the contributing conditions 218 to one or more specific components in the aircraft 112.

The flight data 222 represents operating condition of the aircraft 112 during the period of operation. Examples of operating conditions represented by the flight data 222 include altitude, airspeed, component temperature, engine thrust, fuel consumption, control inputs, acceleration, braking force, and operational events such as take-off, landing, autopilot settings, and critical events such as stall or warnings.

Processing the flight data 222 to determine the set of an altered operation of the aircraft 112 enables the aircraft maintenance system 100 to identify causative factors of altered operation that are outside of faults or degradation of component condition. The manner in which the aircraft 112 is operated may contribute to the degradation or wear of components that lead to altered operation of the aircraft 112. By processing flight data 222 in this way, the aircraft maintenance system 100 may determine that the set of conditions 218 responsible for the altered operation comprises one or more operating conditions during the period.

In an example, an altered operation of the aircraft 112 may include an excessively high brake temperature in combination with a faulty brake cooling fan. Without processing the flight data 222, the aircraft maintenance system 100 may determine that the condition responsible for the excessively high brake temperature is the faulty brake cooling fan.

Processing the flight data 222, including a representation of braking force applied during the period of operation and characteristics of a landing event, enables the aircraft maintenance system 100 to determine that the excessively high brake temperature is caused by the faulty brake cooling fan in combination with abnormal differential braking during the landing event. For example, the prior aircraft operational data 122 may indicate that the faulty brake cooling fan has previously occurred both with and without the presence of excessively high brake temperatures. The machine learning classifier 114 processes the digital twin 110 and determines that the combination of excessively high brake temperatures and a faulty brake cooling fan typically occurs where there is abnormal differential braking during a landing event.

The environmental data 224 represents environmental conditions during the period of operation. Examples of environmental conditions that may be represented by the environmental data 224 include temperature, humidity, precipitation, wind speed, turbulence, altitude, date, time, location, and atmospheric pressure. One or more of these environmental conditions may be derived from one or more sensors on the aircraft 112. The aircraft 112 may comprise thermometers, barometers, anemometers, global positioning system (GPS) equipment, accelerometers, and any other suitable sensors or equipment for detecting the environmental conditions during the period.

Environmental conditions such as precipitation, heat, location, and time may contribute to component wear or degradation. By processing the environmental data 224 the aircraft maintenance system 100 may determine that the set of conditions 218 responsible for the altered operation comprises an environmental condition and/or a combination of environmental conditions. Environmental conditions represented by the environmental data 224 may be associated with a respective time for which the environmental conditions occurred.

In an example, an altered operation of the aircraft 112 may include an electrical fault in a sensor and an electrical fault in a power supply. Without processing the environmental data 224 the aircraft maintenance system 100 may determine that the conditions leading to the electrical fault in the sensor is the electrical fault in the power supply due to their dependence in the aircraft 112.

Processing the environmental data 224, including, a representation of humidity, temperature, location, and time, enables the aircraft maintenance system 100 to determine that the electrical faults in both the sensor and the power supply are caused by prolonged exposure to high humidity and high salinity environments. For example, storing the aircraft 112 in high salinity environments, such as in tropical and coastal regions, may cause a degradation of electrical circuits in the aircraft 112.

The prior aircraft operational data 122 may indicate that electrical faults in sensors have occurred with and without corresponding electrical faults in power supplies. The machine learning classifier 114 processes the digital twin 110 and determines that the combination of electrical faults in sensors and power supplies typically occurs where there is prolonged exposure to high humidity and high salinity environments. In this case the set of conditions 218 indicated in the output data may comprise indications of thresholds for humidity and temperature above which the altered operation is likely to occur and/or an indication of locations in which the altered operation is likely to occur. The set of conditions 218 may additionally be associated with a determined duration affecting the likelihood of the altered operation occurring.

Where the aircraft operational data 118 comprises both flight data 222 and environmental data 224, the aircraft maintenance system 100 may be capable of determining a combination of environmental conditions and operating conditions that are responsible for the altered operation of the aircraft 112. For example, a combination of environmental conditions, such as prolonged exposure to low air temperature in combination with increased heat generated in a component during an operational event, may lead to large fluctuations in component temperature that cause accelerated wear of those components.

To efficiently process the digital twin 110 to determine the set of conditions 218, the aircraft maintenance system 100 may label portions of the prior aircraft operational data 122 according to the identified altered operation. After identifying the altered operation of the aircraft 112, the aircraft maintenance system 100 may associate the aircraft operational data 118 with the identified altered operation. Portions of the prior aircraft operational data 122 may similarly be associated with corresponding altered operations which those portions exhibit. For example, portions of prior aircraft operational data 122 associated with an identified altered operation may be labelled or tagged with an identifier corresponding to the identified altered operation. This enables the machine learning classifier 114 to readily identify portions of prior aircraft operational data 122 that are relevant to determining the set of conditions 218 responsible for the altered operation of the aircraft 112 identified in the aircraft operational data 118.

Altered operation of the aircraft 112 caused by environmental conditions and/or operating conditions can be transient in nature. Where an altered operation is caused by specific operating conditions during flight, specific environmental conditions, or time variant operating and environmental conditions, these causes can be difficult to diagnose. While service crew can replace and service faulty components in the aircraft 112, reproducing and diagnosing the root causes of intermittent altered operations of the aircraft 112 presents a challenge. Processing flight data 222 and/or environmental data 224 enables the aircraft maintenance system 100 to determine the set of conditions 218 responsible for the transient altered operation of the aircraft 112.

In an example, the output data 216 comprises control outputs 220 configured to modify the operation of the aircraft 112 based on the determined set of conditions 218 responsible for the altered operation. The control outputs 220 may be transmitted to the aircraft 112 using the interface 106, such that they can be applied by an aircraft control system during operation of the aircraft 112.

The control outputs 220 may be configured to mitigate the occurrence of the determined set of conditions 218 of the altered operation of the aircraft 112. Where the determined set of conditions 218 include a combination of environmental and/or operating conditions, the control outputs 220 may prevent the aircraft 112 from being operated in a manner that corresponds to the combination of environmental and/or operating conditions.

In an example, the control outputs 220 place limits or restrictions on the operation of the aircraft 112. For example, where the set of conditions 218 include excessive differential braking in combination with a faulty brake cooling fan, the control outputs 220 may place restrictions on the application of differential braking. These restrictions may prevent excessive differential braking when there is a faulty brake cooling fan. Additionally, or alternatively, the control outputs 220 may control one or more warning systems in the aircraft 112 to provide an indication to a pilot that differential braking should be mitigated due to a faulty brake cooling fan.

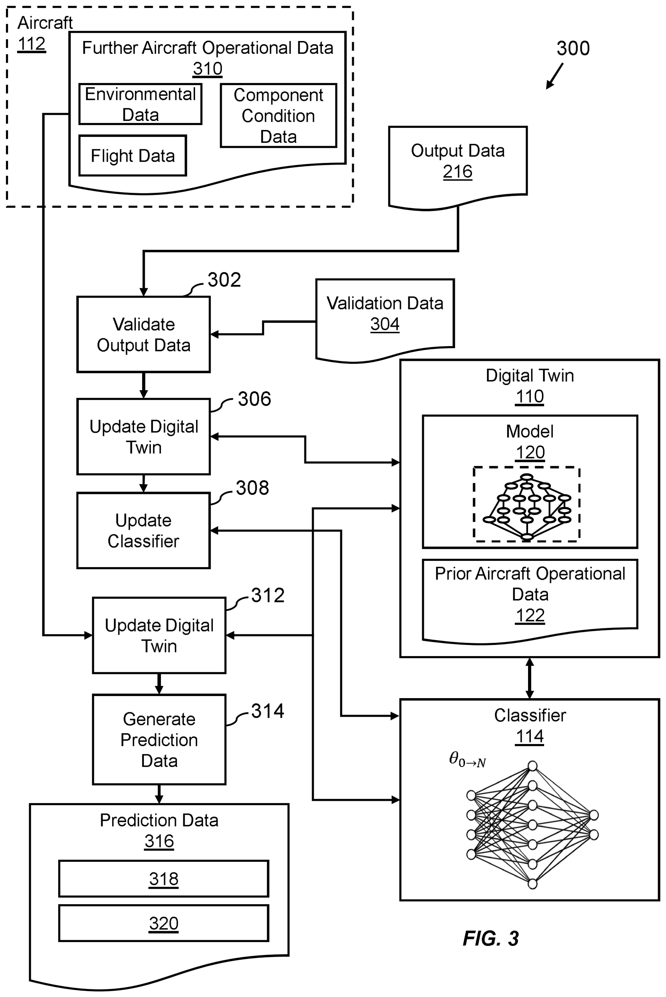

The aircraft maintenance system 100 may be configured to perform additional processes 300, shown schematically in Figure 3, for fine tuning the performance of the aircraft maintenance system 100. The additional process 300 comprises validating 302 the output data 216. In an example, validating 302 the output data 216 comprises obtaining validation data 304 representing an evaluation of the determined set of conditions 218. This may involve service crews, pilots, or other aircraft operators servicing the aircraft 112 according to the output data 216 to evaluate the accuracy of the determined set of conditions 218, and providing the validation data 304 to the aircraft maintenance system 100.

Alternatively, validating 302 the output data 216 involves performing ongoing monitoring of the aircraft 112 to determine whether the identified altered operation is mitigated in response to action taken based on the output data 216. For example, where the output data 216 comprises control outputs 220, the aircraft maintenance system 100 may monitor the aircraft 112 after the control outputs 220 have been used to modify the control of the aircraft 112.

The aircraft maintenance system 100 updates 306 the digital twin 110 based on the determined set of conditions 218 indicated in the output data 216. In an example, updating the digital twin 110 comprises updating the prior aircraft operational data 122, for example, to associate the set of conditions 218 with previous occurrences of the altered operation of the aircraft 112. Updating 306 the digital twin 110 additionally, or alternatively, comprises updating the model 120 of the at least part of the aircraft 112, for example, to reflect a newly identified dependency or function in the aircraft 112.

The aircraft maintenance system 100 updates 308 the machine learning classifier 114, based on the validation data 304. Updating 308 the machine learning classifier 114 may involve modifying the parameters *Θ*_{0 →*N*} representing the policy of the machine learning classifier 114. Where the validation data 304 verifies that the determined set of conditions 218 are responsible for the altered operation, the policy of the classifier 114 may be reinforced. Where the validation data 304 indicates that the determined set of conditions 218 are not responsible for the altered operation, the policy of the classifier 114 may be modified.

The aircraft maintenance system 100 obtains further aircraft operational data 310 corresponding to one or more further periods of operation of the aircraft 112 and updates 312 the digital twin 110 based on the further aircraft operational data 310.

Prediction data 316 is then generated 314 by processing the updated digital twin 110 using the machine learning classifier 114. The prediction data 316 is indicative of a further set of conditions 318 that are predicted to produce a future altered operation of the aircraft 112. In an example, the prediction data 316 comprises an indication of one or more further environmental conditions that are expected to contribute to the future altered operation of the aircraft 112. This enables operators to modify the manner in which the aircraft 112 is operated to mitigate the likelihood that the future altered operation will occur.

As discussed above with respect to Figure 2, exposure to certain conditions for a specific duration may contribute to the accelerated wear of aircraft components leading to altered operation of the aircraft. Where the aircraft 112 has been operated in those conditions for a duration that is approaching the specific duration, the aircraft maintenance system 100 predicts that continued operation in those conditions is likely to cause an altered operation of the aircraft 112. In this case, the prediction data 316 may indicate that the aircraft 112 is to be operated outside of those conditions.

Where the further set of conditions 318 that are predicted to produce a future altered operation comprise one or more environmental conditions, the aircraft maintenance system 100 may schedule the at least part of the aircraft 112 for operation in environmental conditions that are different to the one or more environmental conditions indicated in the prediction data 316.

The prediction data 316 may comprise preventive control outputs 320 for the aircraft 112 that are configured to mitigate the occurrence of the further set of conditions 318 likely to cause the future altered operation. It is to be appreciated that the further set of conditions 318 indicated in the prediction data 316 include operating conditions, environmental conditions, and/or a combination of operating and environmental conditions that are expected to cause the future altered operation of the aircraft 112.

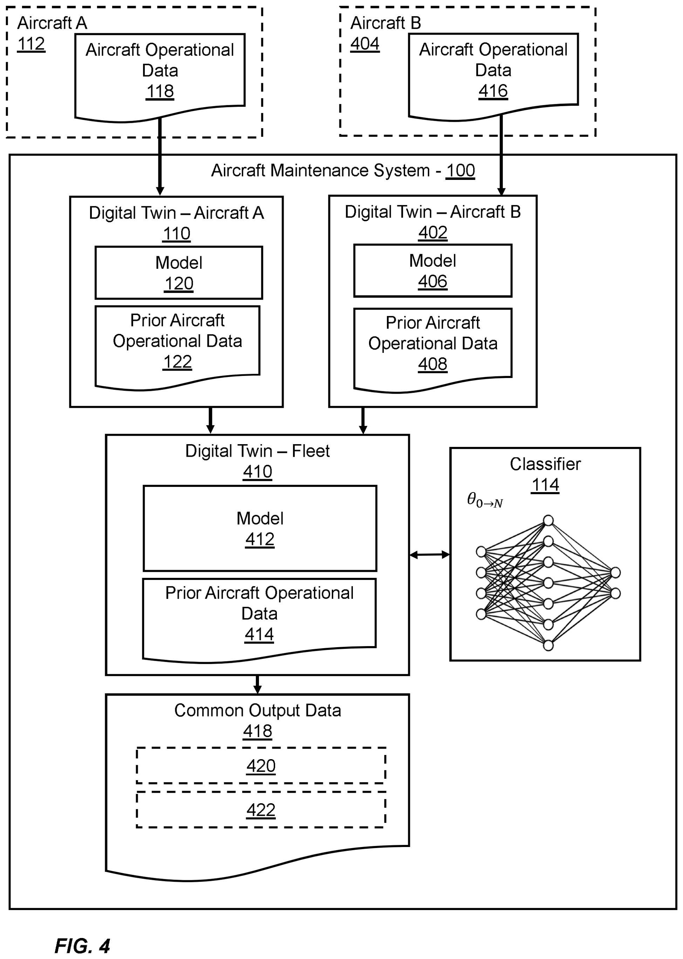

Figure 4 shows, schematically, a configuration of the aircraft maintenance 100 according to examples in which it is configured to monitor a fleet of aircraft. The aircraft maintenance system 100 comprises a first digital twin 110 representing at least part of a first aircraft 112 and a second digital twin 402 representing at least part of a second aircraft 404. The first digital twin 110 comprises a first model 120 and first prior aircraft operational data 122 associated with the first aircraft 112. The second digital twin 402 comprises a second model 406 and second prior aircraft operational data 408 associated with the second aircraft 404.

The aircraft maintenance system 100 comprises a third digital twin 410 representing a category of aircraft corresponding to both the first aircraft 112 and the second aircraft 404. The first aircraft 112 and the second aircraft 404 are the same model of aircraft and the category of aircraft corresponds to the aircraft model. Maintaining the third digital twin 410 enables the aircraft maintenance system 100 to perform fleet level monitoring and determination of contributing conditions that are responsible for altered operations in a plurality of aircraft 112 and 404.

The third digital twin 410 comprises a third model 412 representing at least part of a category of aircraft, and third prior aircraft operational data 414 corresponding to the first aircraft 112 and the second aircraft 404.

The aircraft maintenance system 100 updates the third digital twin 410 based on the first digital twin 110 and the second digital twin 402. Updating the third digital twin 410 may involve updating the third prior aircraft operational data 414 using the first prior aircraft operational data 118 and second prior aircraft operational data 416.

The aircraft maintenance system 100 evaluates the third digital twin 410 using the machine learning classifier 114 to determine a common set of conditions 420 responsible for an altered operation having occurred in the first aircraft 112 and the second aircraft 404. Common output data 418, indicative of the determined common set of conditions 420, is then generated by the aircraft maintenance system 100.

Some conditions responsible for altered operation of aircraft 112 and 404 of altered operation may be relatively rare due their specificity and/or likelihood of occurrence during normal operation. A single aircraft 112 may be subjected to these conditions 420 rarely or never during its lifetime, making these conditions 420 difficult to identify. Maintaining and evaluating the third digital twin 410 in this way, enables the aircraft maintenance system 100 to leverage the data from a plurality of aircraft 112 and 404 to determine causative factors of altered operations that are rare or unlikely for any single aircraft 112. The common output data 418 may comprise common control outputs 422 for modifying the operation of both the first aircraft 112 and the second aircraft 404 to mitigate the occurrence of the common set of conditions 420.

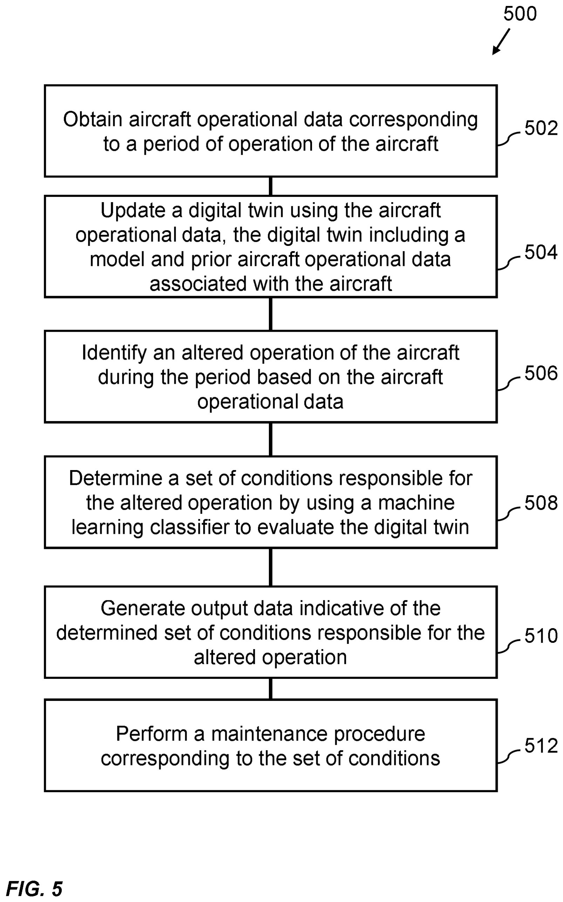

A method 500 of performing maintenance on at least part of an aircraft using the aircraft maintenance system 100 is shown schematically in Figure 5. The method 500 comprises operating the aircraft maintenance system 100 to obtain 502 aircraft operational data 118, update 504 the digital twin 110 using the aircraft operational data 118, and identifying 506 the altered operation of the aircraft 112 based on the aircraft operational data 118. The set of conditions 218 responsible for the altered operation are determined 508 by using the machine learning classifier 114 to evaluate the digital twin 110. Output data 216, indicative of the set of conditions 218, is generated 510 and a maintenance procedure corresponding to the set of conditions 218 is performed 512.

Validation data 304 may be generated by evaluating whether the set of conditions 218 are correct. This may involve performing ongoing monitoring of the aircraft 112 after performing the maintenance procedure to determine whether the altered operation is mitigated. The digital twin 110 may then be updated based on the validation data 304. It is to be appreciated that the examples and variations described above with respect to Figures 1 to 4 may also apply to the method 500.

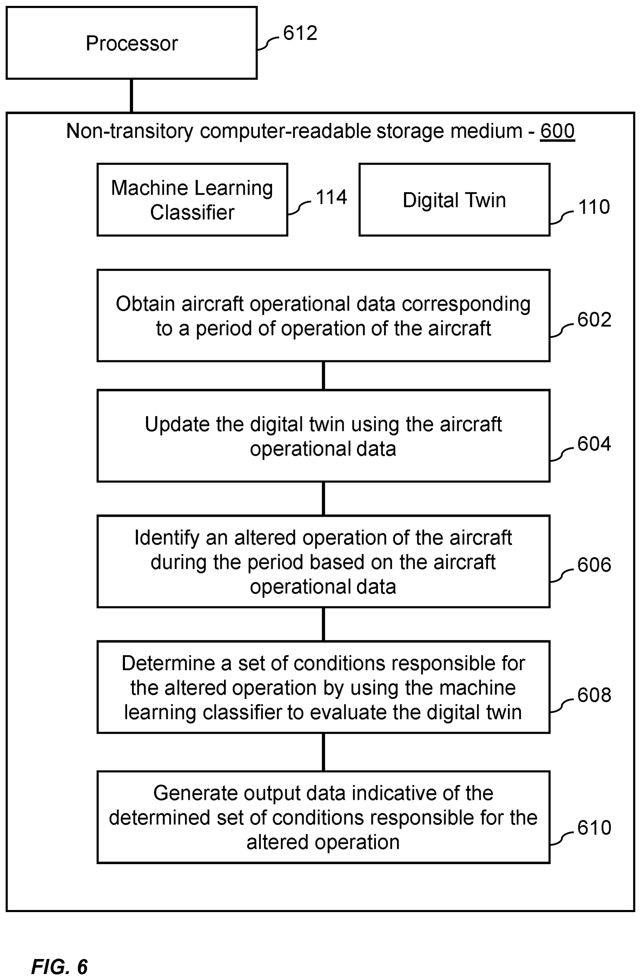

A non-transitory computer-readable storage medium 600 is shown schematically in Figure 6. The non-transitory computer-readable storage medium 600 comprises the digital twin 110, the machine learning classifier 114, and computer-executable instructions 602 to 610. The computer-executable instructions 602 to 610, when executed by a processor 612 cause the processor 612 to implement the functions of the aircraft maintenance system 100 described above with respect to Figures 1 to 4.

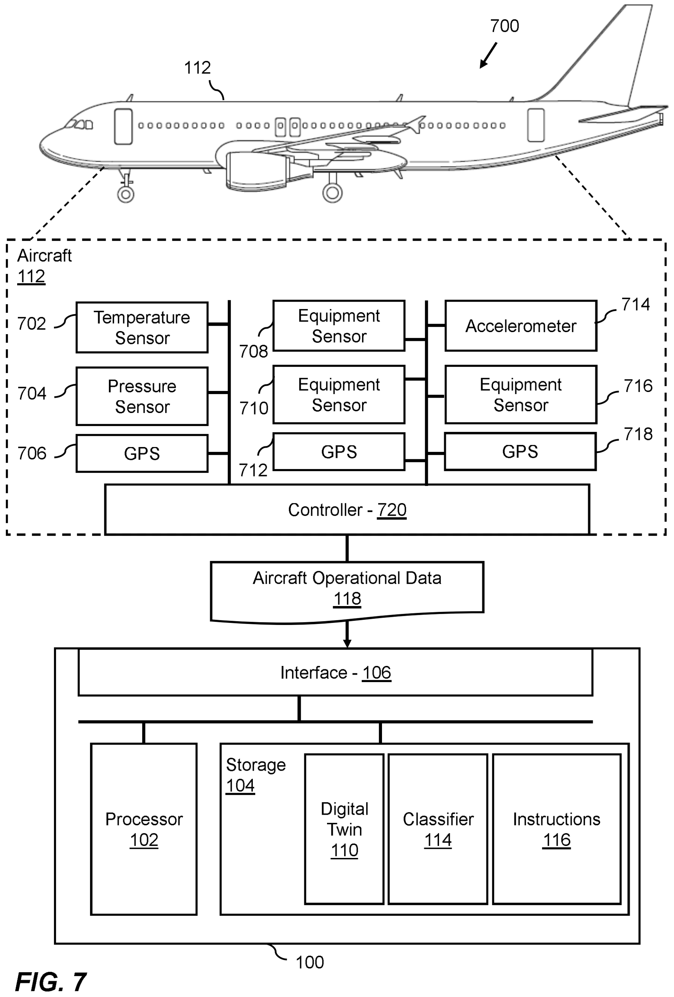

Figure 7 shows a system 700 comprising the aircraft maintenance system 100 and an aircraft 112, schematically. The aircraft 112 comprises sensors 702 to 718 for generating aircraft operational data 118 and a controller 720 configured to transmit the aircraft operational data 118 to the aircraft maintenance system 100.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

It is to noted that the term "or" as used herein is to be interpreted to mean "and/or", unless expressly stated otherwise.

### Numbered Clauses

Various examples of the present disclosure are set out in following numbered clauses:
1. An aircraft maintenance system comprising:
   a processor; and
   storage comprising:
      a digital twin representing at least part of an aircraft, the digital twin including a model and prior aircraft operational data associated with the aircraft;
      a machine learning classifier that is configured to evaluate the digital twin; and
      computer-executable instructions which, when executed by the processor, cause the aircraft maintenance system to:
         obtain aircraft operational data corresponding to a period of operation of the aircraft;
         update the digital twin using the aircraft operational data;
         identify an altered operation of the aircraft during the period based on the aircraft operational data;
         determine a set of conditions responsible for the altered operation by using the machine learning classifier to evaluate the digital twin; and
         generate output data indicative of the set of conditions responsible for the altered operation.
2. The aircraft maintenance system according to clause 1, wherein the output data comprises control outputs configured to modify the operation of the aircraft based on the set of conditions responsible for the altered operation.
3. The aircraft maintenance system according to clause 2, wherein the control outputs are configured to mitigate the occurrence of the set of conditions responsible for the altered operation.
4. The aircraft maintenance system according to any preceding clause, wherein the aircraft operational data comprises:
   environmental data representing environmental conditions during the period of operation;
   flight data representing operating conditions of the aircraft during the period of operation; and
   component condition data representing states of one or more components in the aircraft during the period of operation.
5. The aircraft maintenance system according to clause 4, wherein the environmental conditions are derived from one or more sensors on the aircraft and include any one or more of:
   temperature;
   humidity;
   precipitation;
   wind speed;
   turbulence;
   altitude;
   date;
   time;
   location; and
   atmospheric pressure
6. The aircraft maintenance system according to clause 4 or clause 5, wherein the operating conditions represented by the flight data include any one or more of:
   altitude;
   airspeed;
   component temperature;
   engine thrust;
   fuel consumption;
   control inputs;
   acceleration;
   braking force; and
   operational events.
7. The aircraft maintenance system according to any one of clauses 4 to 6, wherein the set of conditions responsible for the altered operation comprise one or more of the environmental conditions.
8. The aircraft maintenance system according to any one of clauses 4 to 7, wherein the set of conditions responsible for the altered operation comprise one or more of the operating conditions.
9. The aircraft maintenance system according to any one of clauses 4 to 8, wherein the set of conditions responsible for the altered operation comprise a combination of one or more of the environmental conditions and one or more of the operating conditions.
10. The aircraft maintenance system according to any preceding clause, wherein the identified altered operation is transient.
11. The aircraft maintenance system according to any preceding clause, wherein the instructions, when executed by the processor, cause the aircraft maintenance system to:
   validate the set of conditions indicated in the output data;
   update the digital twin based on the set of conditions responsible for the altered operation;
   obtain further aircraft operational data corresponding to one or more further periods of operation of the aircraft;
   update the digital twin based on the further aircraft operational data; and
   generate prediction data by processing the updated digital twin using the machine learning classifier.
12. The aircraft maintenance system according to clause 11, wherein the prediction data comprises an indication of a further set of conditions expected to contribute to a future altered operation in the aircraft.
13. The aircraft maintenance system according to clause 12, wherein the instructions, when executed by the processor, cause the aircraft maintenance system to schedule the at least part of the aircraft for operation in conditions that are different to the further set of conditions indicated in the prediction data.
14. The aircraft maintenance system according to any preceding clause, wherein the digital twin is a first digital twin representing at least part of a first aircraft and the storage comprises:
   a second digital twin representing at least part of a second aircraft; and
   a third digital twin representing a category of aircraft corresponding to both the first aircraft and the second aircraft, and
   wherein the instructions, when executed by the processor, cause the aircraft maintenance system to:
      update the third digital twin based on the first digital twin and the second digital twin;
      evaluate the third digital twin using the machine learning classifier to determine a common set of conditions responsible for an altered operation having occurred in the first aircraft and the second aircraft; and
      generate a common output data indicative of the common set of conditions having occurred in the first aircraft and the second aircraft.
15. The aircraft maintenance system according to any preceding clause, wherein the aircraft maintenance system comprises an interface for obtaining aircraft operational data from one or more aircraft.
16. The aircraft maintenance system according to any preceding clause, wherein the instructions, when executed by the processor, cause the aircraft maintenance system to:
   obtain validation data representing an evaluation of the set of conditions responsible for the altered operation; and
   update the machine learning classifier based on the validation data.
17. A method of performing maintenance on at least part of an aircraft using the aircraft maintenance system according to any preceding clause, the method comprising:
   obtaining aircraft operational data corresponding to a period of operation of the aircraft;
   updating a digital twin using the aircraft operational data, the digital twin representing at least part of an aircraft, the digital twin including a model and prior aircraft operational data associated with the aircraft;
   identifying an altered operation of the aircraft during the period based on the aircraft operational data;
   determining a set of conditions responsible for the altered operation by using a machine learning classifier to evaluate the digital twin;
   generating output data indicative of the set of conditions responsible for the altered operation; and
   performing a maintenance procedure corresponding to the set of conditions.
18. The method according to clause 17, comprising:
   generating control outputs configured to modify the operation of the aircraft based on the set of conditions responsible for the altered operation, wherein the control outputs are configured to mitigate the occurrence of the set of conditions; and
   controlling the aircraft according to the control outputs.
19. The method according to clause 17 or clause 18, wherein the aircraft operational data comprises:
   environmental data representing environmental conditions during the period of operation;
   flight data representing operating conditions of the aircraft during the period of operation; and
   component condition data representing states of one or more components in the aircraft during the period of operation.
20. The method according to any one of clauses 17 to 19, wherein the set of conditions responsible for the altered operation comprise one or more of the environmental conditions.
21. The method according to any one of clauses 17 to 20, wherein the set of conditions responsible for the altered operation comprise one or more of the operating conditions.
22. The method according to any one of clauses 17 to 21, wherein the set of conditions responsible for the altered operation comprise a combination of one or more of the environmental conditions and one or more of the operating conditions.
23. The method according to any one of clauses 17 to 22, comprising:
   generating validation data representing an evaluation of the set of conditions; and
   updating the digital twin based on the validation data.
24. A non-transitory computer-readable storage medium, comprising:
   a digital twin representing at least part of an aircraft, the digital twin including a model and prior aircraft operational data associated with the aircraft;
   a machine learning classifier that is configured to evaluate the digital twin; and
   computer-executable instructions which, when executed by the processor, cause the aircraft maintenance system to:
      obtain aircraft operational data corresponding to a period of operation of the aircraft;
      update the digital twin using the aircraft operational data;
      identify an altered operation of the aircraft during the period based on the aircraft operational data;
      determine a set of conditions responsible for the altered operation by using the machine learning classifier to evaluate the digital twin; and
      generate output data indicative of the set of conditions responsible for the altered operation.
25. A system comprising:
   an aircraft maintenance system according to any one of clauses 1 to 16; and
   an aircraft comprising:
      one or more sensors for generating aircraft operational data; and
      a controller configured to transmit the aircraft operational data to the aircraft maintenance system.

## Claims

1. An aircraft maintenance system comprising:
a processor; and
storage comprising:
a digital twin representing at least part of an aircraft, the digital twin including a model and prior aircraft operational data associated with the aircraft;
a machine learning classifier that is configured to evaluate the digital twin; and
computer-executable instructions which, when executed by the processor, cause the aircraft maintenance system to:
obtain aircraft operational data corresponding to a period of operation of the aircraft;
update the digital twin using the aircraft operational data;
identify an altered operation of the aircraft during the period based on the aircraft operational data;
determine a set of conditions responsible for the altered operation by using the machine learning classifier to evaluate the digital twin; and
generate output data indicative of the set of conditions responsible for the altered operation.

2. The aircraft maintenance system according to claim 1, wherein the output data comprises control outputs configured to modify the operation of the aircraft based on the set of conditions responsible for the altered operation, and optionally, wherein the control outputs are configured to mitigate the occurrence of the set of conditions responsible for the altered operation.

3. The aircraft maintenance system according to any preceding claim, wherein the aircraft operational data comprises:
environmental data representing environmental conditions during the period of operation;
flight data representing operating conditions of the aircraft during the period of operation; and
component condition data representing states of one or more components in the aircraft during the period of operation.

4. The aircraft maintenance system according to claim 3, wherein the environmental conditions are derived from one or more sensors on the aircraft and include any one or more of: temperature; humidity; precipitation; wind speed; turbulence; altitude; date; time; location; and atmospheric pressure, and/or wherein the operating conditions represented by the flight data include any one or more of: altitude; airspeed; component temperature; engine thrust; fuel consumption; control inputs; acceleration; braking force; and operational events.

5. The aircraft maintenance system according to any one of claims 3 to 4, wherein the set of conditions responsible for the altered operation comprise any of:
one or more of the environmental conditions;
one or more of the operating conditions; and/or
a combination of one or more of the environmental conditions and one or more of the operating conditions.

6. The aircraft maintenance system according to any preceding claim, wherein the instructions, when executed by the processor, cause the aircraft maintenance system to:
validate the set of conditions indicated in the output data;
update the digital twin based on the set of conditions responsible for the altered operation;
obtain further aircraft operational data corresponding to one or more further periods of operation of the aircraft;
update the digital twin based on the further aircraft operational data; and
generate prediction data by processing the updated digital twin using the machine learning classifier,
optionally wherein the prediction data comprises an indication of a further set of conditions expected to contribute to a future altered operation in the aircraft, and
optionally, wherein the instructions, when executed by the processor, cause the aircraft maintenance system to schedule the at least part of the aircraft for operation in conditions that are different to the further set of conditions indicated in the prediction data.

7. The aircraft maintenance system according to any preceding claim, wherein the digital twin is a first digital twin representing at least part of a first aircraft and the storage comprises:
a second digital twin representing at least part of a second aircraft; and
a third digital twin representing a category of aircraft corresponding to both the first aircraft and the second aircraft, and
wherein the instructions, when executed by the processor, cause the aircraft maintenance system to:
update the third digital twin based on the first digital twin and the second digital twin;
evaluate the third digital twin using the machine learning classifier to determine a common set of conditions responsible for an altered operation having occurred in the first aircraft and the second aircraft; and
generate a common output data indicative of the common set of conditions having occurred in the first aircraft and the second aircraft.

8. The aircraft maintenance system according to any preceding claim, wherein the aircraft maintenance system comprises an interface for obtaining aircraft operational data from one or more aircraft, and optionally, wherein the instructions, when executed by the processor, cause the aircraft maintenance system to:
obtain validation data representing an evaluation of the set of conditions responsible for the altered operation; and
update the machine learning classifier based on the validation data.

9. A method of performing maintenance on at least part of an aircraft using the aircraft maintenance system according to any preceding claim, the method comprising:
obtaining aircraft operational data corresponding to a period of operation of the aircraft;
updating a digital twin using the aircraft operational data, the digital twin representing at least part of an aircraft, the digital twin including a model and prior aircraft operational data associated with the aircraft;
identifying an altered operation of the aircraft during the period based on the aircraft operational data;
determining a set of conditions responsible for the altered operation by using a machine learning classifier to evaluate the digital twin;
generating output data indicative of the set of conditions responsible for the altered operation; and
performing a maintenance procedure corresponding to the set of conditions.

10. The method according to claim 9, comprising:
generating control outputs configured to modify the operation of the aircraft based on the set of conditions responsible for the altered operation, wherein the control outputs are configured to mitigate the occurrence of the set of conditions; and
controlling the aircraft according to the control outputs.

11. The method according to claim 9 or claim 10, wherein the aircraft operational data comprises:
environmental data representing environmental conditions during the period of operation;
flight data representing operating conditions of the aircraft during the period of operation; and
component condition data representing states of one or more components in the aircraft during the period of operation.

12. The method according to any one of claims 9 to 11, wherein the set of conditions responsible for the altered operation comprise any of:
one or more of the environmental conditions;
one or more of the operating conditions; and/or
one or more of the environmental conditions and one or more of the operating conditions.

13. The method according to any one of claims 9 to 12, comprising:
generating validation data representing an evaluation of the set of conditions; and
updating the digital twin based on the validation data.

14. A non-transitory computer-readable storage medium, comprising:
a digital twin representing at least part of an aircraft, the digital twin including a model and prior aircraft operational data associated with the aircraft;
a machine learning classifier that is configured to evaluate the digital twin; and
computer-executable instructions which, when executed by the processor, cause the aircraft maintenance system to:
obtain aircraft operational data corresponding to a period of operation of the aircraft;
update the digital twin using the aircraft operational data;
identify an altered operation of the aircraft during the period based on the aircraft operational data;
determine a set of conditions responsible for the altered operation by using the machine learning classifier to evaluate the digital twin; and
generate output data indicative of the set of conditions responsible for the altered operation.

15. A system comprising:
an aircraft maintenance system according to any one of claims 1 to 8; and
an aircraft comprising:
one or more sensors for generating aircraft operational data; and
a controller configured to transmit the aircraft operational data to the aircraft maintenance system.
